# EUROPEAN PATENT APPLICATION

(11) **EP 3 309 579 A1**
(43) Date of publication of application: **18.04.2018**
(21) Application number: 16200594.6
(22) Date of filing: 24.11.2016
(51) Int. Cl.: G01S 7/40, G01S 13/95, G01S 13/86

(54) **APPARATUS AND METHOD FOR CALIBRATING AND VALIDATING MICRO RAIN RADAR**

(30) Priority: 14.10.2016 KR 20160133766
(71) Applicant: Korea Meteorological Administration, Seoul 07062 (KR)
(72) Inventor: Choi, Jeong Hwan, Seoul (KR); Chang, Ki-Ho, Seoul (KR); Jeong, Jin-Yim, Seoul (KR); Yang, Ha Young, Seoul (KR); Kang, Miyoung, Seoul (KR); Kim, Baek-Jo, Seoul (KR)
(74) Representative: Rüger, Barthelt & Abel

(57) **Abstract**

Disclosed herein is an apparatus for calibrating and validating an MRR. The apparatus includes a correlation calculation unit configured to determine a correlation between a precipitation strength value and a precipitation measurement value, a regression equation calculation unit configured to calculate a regression equation for the precipitation strength value and to calculate a result value of the regression equation, an optimum accumulation time determination unit configured to determine an optimum accumulation time based on the correlation and the result value, a rain cloud vertical sampling unit configured to sample a rain cloud example, a vertical reflectance comparison unit configured to compare a calibrated MRR at a shortest range distance with a vertical reflectance according to a wind system, and a radar constant correction unit configured to correct a constant of an MRR based on the optimum value or the sampling and a result value of the comparison.

## Description

### CROSS REFERENCE TO RELATED APPLICATION

The present application claims the benefit of Korean Patent Application No. 10-2016-0133766 filed in the Korean Intellectual Property Office on 14 October, 2016, the entire contents of which are incorporated herein by reference.

### BACKGROUND OF THE INVENTION

### 1. Technical Field

The present invention relates to an apparatus and method for calibrating and validating a micro rain radar using a comparison and validation.

### 2. Description of the Related Art

In weather control and development, it is necessary to understand the physical characteristics of clouds and precipitation. As research of a cloud-precipitation process is increased, various observation devices are constructed and managed based on a Cloud Physics Observation System (CPOS), that is, a sole cloud physical observation system in Korea, in order to check microphysical characteristics.

Furthermore, a change in the drop size distribution and micro rain strength using a micro rain radar (MRR), that is, a remote precipitation observation device, is used to validate artificial precipitation enhancement/snowfall enhancement experiments and to analyze the lower layer of the atmosphere. A precipitation profile can be checked through such a change. Furthermore, precipitation information about the lower layer of the atmosphere through the MRR may be calculated based on the amount of precipitation with respect to accumulated precipitation, and plays an important role in determining a seeding altitude by checking a melting layer.

The MRR is equipment for vertically radiating electromagnetic waves (24GHz) onto the atmosphere, measuring a signal reflected and returned from water particles in clouds, and observing a radar reflectance and the drop velocity of the particles. Rainfall strength, liquid water contents (LWC) and a drop size distribution (DSD) may be calculated using two types of information.

Such a remote observation device gradually becomes deteriorated depending on various weather factors and natural environments and may have an error attributable to the influence of the attenuation of vertical radio waves and a loss of laser intensity. Accordingly, it is necessary to correct a measured value of the MRR.

In a conventional technology, a technology for correcting a measured value of the MRR includes Korean Patent No. 10-1571438 (April 24, 2015) entitled "Method of Adjusting Radar Precipitation Estimation, Recording Medium and Device for Performing the Method." The method of adjusting radar precipitation disclosed in this patent includes the steps of calculating an actual error of radar precipitation strength from precipitation strength of a ground rain gauge, determining a valid radius having a spatial correlation for the actual error, calculating an adjusted error of the radar precipitation strength by applying the actual error and the valid radius to a local gauge correction (LGC) method, and adjusting the radar precipitation strength by incorporating the adjusted error.

In accordance with the conventional technology, it is inconvenient to calibrate and validate an MRR in each observation area because an actual error between a radar precipitation observation value and rain gauge precipitation strength is calculated. Furthermore, if a ground rain gauge is not present, it is difficult to calibrate and validate the MRR.

Furthermore, there are time and space limits to moving observation devices disposed in respective observation areas to one place and calibrating and validating the observation devices, and there is a difficulty in an observing system.

Furthermore, in Korean Patent No. 10-1423278 (July 18, 2014) entitled "System for Calculating Rainrate using Local Gauge Correction and Method thereof", a precipitation phenomenon is corrected by applying local gage correction to precipitation strength measured by a radar. However, this patent has a problem in that the characteristics of each observation point are not incorporated.

### [Prior Art Document]

### [Patent Document]

(Patent Document 1) KR 10-1571438 B (November 24, 2015)
(Patent Document 2) KR 10-1423278 B (July 18, 2014)

### SUMMARY OF THE INVENTION

Accordingly, the present invention has been made keeping in mind the above problems occurring in the prior art, and an object of the present invention is to provide an apparatus and method for calibrating and validating a micro rain radar for securing reliability and accuracy of a micro rain radar by performing calibration and validation on the micro rain radar.

In accordance with an embodiment of the present invention, an apparatus for calibrating and validating a micro rain radar (MRR) includes a correlation calculation unit configured to determine a correlation between a precipitation strength value and a precipitation measurement value, a regression equation calculation unit configured to calculate a regression equation for the precipitation strength value and to calculate a result value of the regression equation, an optimum accumulation time determination unit configured to determine an optimum accumulation time based on the correlation and the result value, a rain cloud vertical sampling unit configured to sample a rain cloud example, a vertical reflectance comparison unit configured to compare a calibrated MRR at the shortest range distance with a vertical reflectance according to a wind system, and a radar constant correction unit configured to correct a constant of an MRR based on the optimum value or the sampling and a result value of the comparison.

The apparatus for calibrating and validating an MRR may further include an MRR configured to output the precipitation strength value.

The apparatus for calibrating and validating an MRR may further include a rain gauge configured to measure the amount of precipitation and to output the precipitation measurement value.

In accordance with another embodiment of the present invention, a method for calibrating and validating an MRR includes determining a correlation between a precipitation strength value from the MRR and a precipitation measurement value from a rain gauge, calculating a regression equation for the precipitation strength value and calculating a result value of the regression equation, determining an optimum accumulation time based on the correlation and the result value, and correcting the constant of the MRR based on the optimum value.

The method for calibrating and validating an MRR may further include sampling a rain cloud example, comparing a calibrated MRR at the shortest range distance with a vertical reflectance according to a wind system, and correcting the constant of the MRR based on the sampling and a result value of the comparison.

### BRIEF DESCRIPTION OF THE DRAWINGS

FIG. 1 is a block diagram of an apparatus for calibrating and validating a micro rain radar in accordance with an embodiment of the present invention.
FIG. 2 is a flowchart illustrating a method for calibrating and validating a micro rain radar in accordance with an embodiment of the present invention.
FIG. 3 is a diagram for illustrating a calibration and validation method of a micro rain radar.

### DETAILED DESCRIPTION

The present invention may be modified in various ways and may have some embodiments. Specific embodiments are to be illustrated in the drawings and are to be described the detailed description. The effects and characteristics of the present invention and a method for achieving them will become evident with reference to the embodiments described in detail along with the drawings. However, the present invention is not limited to the following embodiments, but may be implemented in various forms.

Hereinafter, embodiments of the present invention are described in detail with reference to the accompanying drawings. In the drawings, the same or corresponding elements are assigned the same reference numerals, and a redundant description thereof is omitted.

An embodiment of the present invention relates to a technology for selecting a precipitation example, obtaining a correlation between a ground rain gauge disposed in each observation area and an accumulated time using micro rain radar precipitation strength data, calibrating and validating a micro rain radar through a regression equation, and calibrating and validating a micro rain radar using a micro rain radar at the shortest distance by applying a wind system and a rain cloud example in an area in which a rain gauge is not disposed.

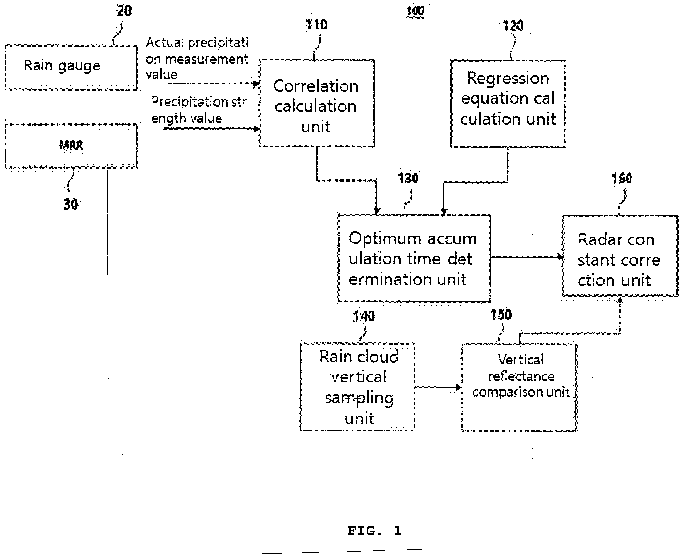

FIG. 1 is a block diagram of an apparatus 100 for calibrating and validating a micro rain radar (hereinafter referred to as an "MRR") in accordance with an embodiment of the present invention.

Referring to FIG. 1, there may be provided an MRR 30, a rain gauge 20, and the apparatus 100 for calibrating and validating an MRR.

The MRR 30 is equipment for vertically radiating electromagnetic waves (24GHz) onto the atmosphere, measuring a signal reflected and returned from water particles in clouds, and observing a radar reflectance and the drop velocity of the particles. Rainfall strength, liquid water contents (LWC) and a drop size distribution (DSD) may be calculated using two types of information.

The rain gauge 20 may be constructed in each observation area. A rain gauge used for precipitation observation includes a conduction type, a reservoir water type, a load cell type and a weight type. From among them, the conduction type rain gauge having simple measurement and signal processing is widely used. The rain gauge 20 may be the conduction type rain gauge. The conduction type rain gauge 20 converts the number of times that pooled rainwater conducts a conduction bucket into an electrical signal and measures the amount of precipitation. The amount of precipitation is measured in a 0.1 mm or 0.5 mm unit.

The MRR 30 and the rain gauge 20 may be connected to the apparatus 100 for calibrating and validating an MRR over a network. Furthermore, an example of the network includes a local area network (LAN) and a wide area network (WAN), for example, the Internet. The network may be implemented using various wired or wireless protocols, for example, Ethernet, a universal serial bus (USB), FIREWIRE, global system for mobile communications (GSM), enhanced data GSM environment (EDGE), code division multiple access (CDMA), time division multiple access (TDMA), Bluetooth, Wi-Fi, a voice over Internet protocol (VoIP), Wi-MAX, or known network protocols including other specific suitable communication protocols.

The MRR 30 and the rain gauge 20 may be connected to the apparatus 100 for calibrating and validating an MRR over the network or may be connected to the apparatus 100 for calibrating and validating an MRR directly or through other means.

The apparatus 100 for calibrating and validating an MRR receives a precipitation strength value from the MRR 30 and receives a precipitation measurement value from the rain gauge 20. The precipitation strength value may be obtained based on information measured by the MRR. The MRR 20 may provide a precipitation strength value other than the lowest lower layer.

The apparatus 100 for calibrating and validating an MRR determines a correlation between the precipitation strength value and the precipitation measurement value. The apparatus 100 for calibrating and validating an MRR may display the correlation and the precipitation strength of the MRR converted into an actually measured accumulated precipitation value.

The apparatus 100 for calibrating and validating an MRR calculates a egression equation for the precipitation strength value. The regression equation is for regression analysis and is an equation for predicting the other parameter value from one parameter. The apparatus 100 for calibrating and validating an MRR calculates a result value of the calculated regression equation.

Next, the apparatus 100 for calibrating and validating an MRR classifies the determined correlation and the result value of the regression equation according to a precipitation accumulation time. For example, the apparatus 100 for calibrating and validating an MRR may perform classification by dividing the precipitation accumulation time into 10 minutes, 20 minutes, 30 minutes and 60 minutes. The apparatus 100 for calibrating and validating an MRR determines an optimum value R².

The apparatus 100 for calibrating and validating an MRR corrects the radar constant of the MRR 30 using the determined optimum value.

In order to determine the optimum value, the apparatus 100 for calibrating and validating an MRR receives a precipitation measurement value from the rain gauge 20. The rain gauge 20 may not be installed at a measurement point.

That is, if a precipitation measurement value is not received from the rain gauge 20, the apparatus 100 for calibrating and validating an MRR samples a rain cloud example and compares a calibrated MRR at the shortest range distance with vertical reflectance according to a wind system. The apparatus 100 for calibrating and validating an MRR corrects the radar constant of the MRR by applying the extracted example and a condition.

For such an operation according to an embodiment of the present invention, the apparatus 100 for calibrating and validating an MRR includes a correlation calculation unit 110, a regression equation calculation unit 120, an optimum accumulation time determination unit 130, a rain cloud vertical sampling unit 140, a vertical reflectance comparison unit 150 and a radar constant correction unit 160.

The correlation calculation unit 110 receives a precipitation strength value from the MRR 20, receives a precipitation measurement value from the rain gauge 20, and determines a correlation between the precipitation strength value and the precipitation measurement value. The correlation calculation unit 110 outputs the determined correlation to the optimum accumulation time determination unit 130.

The regression equation calculation unit 120 calculates a regression equation for the precipitation strength value and calculates a result value of the calculated regression equation. The regression equation calculation unit 120 outputs the calculated result value of the regression equation to the optimum accumulation time determination unit 130.

The optimum accumulation time determination unit 130 classifies the determined correlation and the result value of the regression equation according to a precipitation accumulation time. The optimum accumulation time determination unit 130 may perform classification by dividing the precipitation accumulation time into 10 minutes, 20 minutes, 30 minutes and 60 minutes, for example. The optimum accumulation time determination unit 130 determines an optimum value R² and outputs the determined optimum value to the radar constant correction unit 160.

The radar constant correction unit 160 corrects the radar constant of the MRR using the determined optimum value.

In order to determine the optimum value, the apparatus 100 for calibrating and validating an MRR receives a precipitation measurement value from the rain gauge 20. The rain gauge 20 may not be installed at a measurement point.

In this case, the rain cloud vertical sampling unit 140 samples a rain cloud example. The vertical reflectance comparison unit 150 compares a calibrated MRR at the shortest range distance with vertical reflectance according to a wind system, and outputs a corresponding result value to the radar constant correction unit 160. The radar constant correction unit 160 corrects the radar constant of the MRR by applying the extracted rain cloud example and a condition.

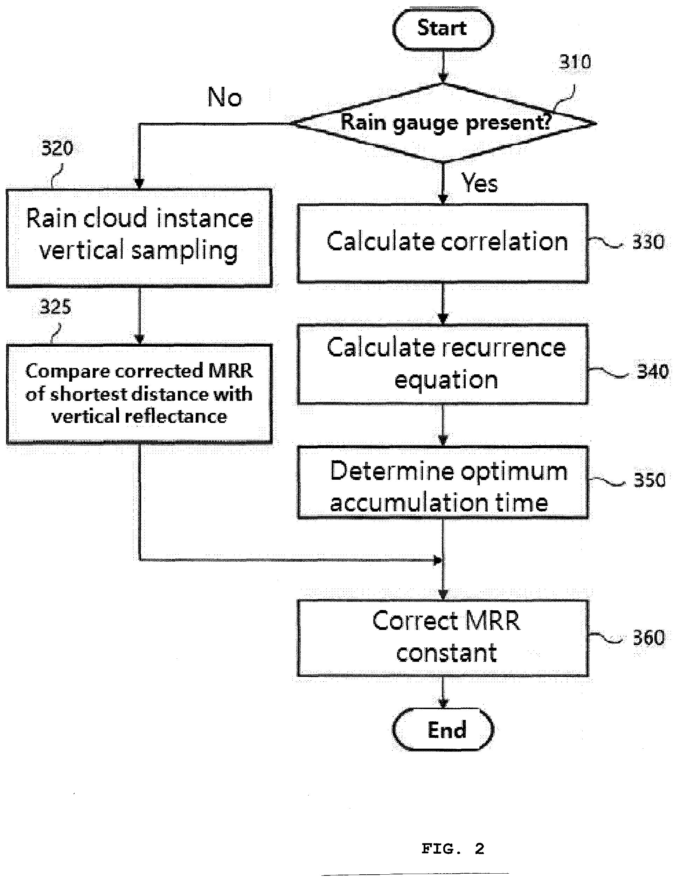

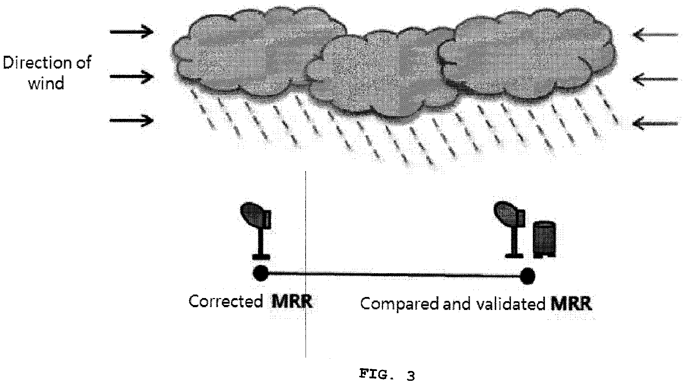

A method for calibrating and validating an MRR is described below with reference to FIGS. 2 and 3.

FIG. 2 is a flowchart illustrating the method for calibrating and validating an MRR in accordance with an embodiment of the present invention, and FIG. 3 is a diagram for illustrating the method for calibrating and validating an MRR.

First, at step 310, the apparatus 100 for calibrating and validating an MRR determines whether the rain gauge 20 is present at a corresponding observation point. If, as a result of the determination, it is determined that the rain gauge 20 is present at a corresponding observation point, the apparatus 100 for calibrating and validating an MRR determines a correlation between a precipitation strength value received from the MRR 20 and a precipitation measurement value received from the rain gauge 20 at step 330.

The apparatus 100 for calibrating and validating an MRR calculates a regression equation for the precipitation strength value at step 340, and calculates a result value of the calculated regression equation.

At step 350, the apparatus 100 for calibrating and validating an MRR determines a precipitation optimum accumulated time based on the determined correlation and the result value of the regression equation. At step 360, the apparatus 100 for calibrating and validating an MRR corrects the radar constant of the MRR using the determined optimum value.

In contrast, if, as a result of the determination at step 310, it is determined that the rain gauge 20 is not present at a corresponding observation point, the rain gauge 20 samples a rain cloud example at step 320. Furthermore, the apparatus 100 for calibrating and validating an MRR compares a calibrated MRR at the shortest range distance with a vertical reflectance according to a wind system at step 325 and proceeds to step 360. As shown in FIG. 4, a rain cloud example and the direction of the wind may decide performance of an MRR.

If the rain gauge 20 is not installed at a measurement point, the apparatus 100 for calibrating and validating an MRR corrects the radar constant of the MRR by applying the extracted rain cloud example and a condition at step 360.

In accordance with the aforementioned embodiment, an optimized relation equation is determined using the amount of precipitation according to whether a rain gauge is present or not and more accurate observation data of an MRR with respect to a precipitation example in each observation area. The MRR is calibrated and validated. Accordingly, the present invention may be used in data for cloud microphysical research.

As described above, the detailed embodiments of the present invention have been described in the detailed description. However, the present invention may be modified in various ways without departing from the category of the invention. Accordingly, the technical spirit of the present invention should not be limited to the aforementioned embodiments, but should be defined by not only the appended claims, but equivalents thereof.

## Claims

1. An apparatus for calibrating and validating a micro rain radar (MRR), the apparatus comprising:
a correlation calculation unit configured to determine a correlation between a precipitation strength value and a precipitation measurement value;
a regression equation calculation unit configured to calculate a regression equation for the precipitation strength value and to calculate a result value of the regression equation;
an optimum accumulation time determination unit configured to determine an optimum accumulation time based on the correlation and the result value;
a rain cloud vertical sampling unit configured to sample a rain cloud example;
a vertical reflectance comparison unit configured to compare a calibrated MRR at a shortest range distance with a vertical reflectance according to a wind system; and
a radar constant correction unit configured to correct a constant of an MRR based on the optimum value or the sampling and a result value of the comparison.

2. The apparatus of claim 1, further comprising an MRR configured to output the precipitation strength value.

3. The apparatus of claim 1, further comprising a rain gauge configured to measure an amount of precipitation and to output the precipitation measurement value.

4. A method for calibrating and validating a micro rain radar (MRR), the method comprising:
determining a correlation between a precipitation strength value from the MRR and a precipitation measurement value from a rain gauge;
calculating a regression equation for the precipitation strength value and calculating a result value of the regression equation;
determining an optimum accumulation time based on the correlation and the result value; and
correcting a constant of the MRR based on the optimum value.

5. The method of claim 4, further comprising:
sampling a rain cloud example;
comparing a calibrated MRR at a shortest range distance with a vertical reflectance according to a wind system; and
correcting the constant of the MRR based on the sampling and a result value of the comparison.
